# EUROPÄISCHE PATENTANMELDUNG

(11) **EP 0 696 424 A1**
(43) Veröffentlichungstag der Anmeldung: **14.02.1996**
(21) Anmeldenummer: 95110650.9
(22) Anmeldetag: 08.07.1995
(51) Int. Cl.: A01N 59/16, C08K 3/00, C08K 9/12

(54) **Zusammensetzungen enthaltend Silber auf nicht zeolitischen Trägeroxiden**

(30) Priorität: 16.07.1994 DE 4425278
(71) Anmelder: BASF AKTIENGESELLSCHAFT, D-67056 Ludwigshafen (DE)
(72) Erfinder: Gehrer, Eugen, Dr., D-67069 Ludwigshafen (DE); Thoma, Richard, Dr., D-67271 Battenberg (DE); Greening, Giorgio, Dr., D-64380 Rossdorf (DE); Speakman, John-Bryan, Dr., D-67273 Bobenheim (DE)

(57) **Zusammenfassung**

Zusammensetzungen, die Silber mit einem Teilchendurchmesser von 0,001 bis 5 µm auf einem neutralen oder basischen nicht zeolithischen Trägeroxid der Elemente der Gruppe IIa, IIIa, IIb, IIIb des Periodensystems der Elemente, der Lanthaniden oder deren Gemische enthalten, sowie ein Verfahren zur Herstellung dieser Zusammensetzungen und antibiotische Mittel, die diese Zusammensetzungen enthalten.

## Beschreibung

Die vorliegende Erfindung betrifft Mischungen, die Silber mit einem kleinen Teilchendurchmesser auf einem neutralen oder basischen nicht zeolithischen Trägeroxiden enthalten, ein Verfahren zu deren Herstellung und antibiotische Mittel, die diese Mischungen enthalten.

Das Wachstum von Mikroorganismen in bewohnten Räumen auf Teppichen und anderen Textilien wird nicht nur für die Weiterverbreitung von ansteckenden Krankheiten (insbesondere in Krankenhäusern), sondern auch für das Sick Building Syndrome, die Building Releated Illness sowie die Bildung von moderigen Gerüchen verantwortlich gemacht.

Es ist seit langem bekannt, daß Ag-, Cu- und Zn-Ionen desinfizierende Eigenschaften haben.

Aus der EP-A-275 047, EP-A-322 814, EP-A- 288 063 und EP-A-270 129 ist die Verwendung von antibiotischen Zeolithen als Zusatz zu Kunststoffen und Kunststoffasern bekannt, um an deren Oberfläche das Wachstum von Mikroorganismen zu verhindern. Dabei wird Silber oder ein anderes antibiotisch wirksames Metallion wie z.B. Cu, Zn, Hg, Sn, Pb, Bi, Cd, Cr oder Tl in ionischer Form an Ionenaustauscher gebunden. Als Ionenaustauscher wurden Zeolithe (A-, X-, Y-, T-Zeolithe, Mordenite, Sodalithe, Analcim, Chlinoptilolite oder Erionithe als auch amorphe Aluminiumsilikate beschrieben.

Aus Chem. Abstr. Vol 118, 75371 k ist die Verwendung von Ag, Cu, Zn, Ni, Pt, Sn, As, Pb, Cd und Cr enthaltende Calciumphosphaten, insbesondere von Hydroxyapatiten, bekannt.

In J. Mater. Sci., 27(18), 5027-30 wurden Ag⁺ an Tone, insbesondere an Montmorillonite, gebunden und in JP 04210606 an Na₂Si₂O₅. AgNO₃ auf SiO₂ wurde in Chem. Abstr. Vol 115, 273442 k, AgCl/TiO₂ in WO-A-91/00011, AgCl auf Aluminosilikat in Chem. Abstr. Vol 108, 137657 n beschrieben.

Insbesondere für die Anwendung im Textilfaserbereich ist es wichtig, daß das Silber beim Waschen nicht ausgelaugt wird und sich nicht durch die Einwirkung von Sonnenlicht verfärbt. Ionisch gebundenes Silber wird jedoch bei der Einwirkung von Laugen als schwarzes AgO ausgefällt, was zu einer Verfärbung der Produkte führt. Kolloidales metallisches Silber hat ebenfalls bakterizide Eigenschaften (Kirk-Othmer, Encyclopedia of Chemical Technology, 1979, 805 bis 807), jedoch eine von vornherein dunkle Farbe, so daß es für die Dotierung heller Fasern (insbesondere Teppiche) nicht in Frage kommt.

Der vorliegenden Erfindung lag daher die Aufgabe zugrunde, den zuvor genannten Nachteilen abzuhelfen.

Demgemäß wurden neue Mischungen, die Silber mit einem Teilchendurchmesser von 0,001 bis 5 µm auf einem neutralen oder basischen nicht zeolithischen Trägeroxid der Elemente der Gruppe IIa, IIIa, IIb, IIIb des Periodensystems der Elemente, der Lanthaniden oder deren Gemische, gefunden sowie ein Verfahren zur Herstellung von diesen Mischungen durch Tränken der neutralen oder basischen nicht zeolithischen Trägeroxide mit einer Silbernitrat- oder Silberacetatlösung, Trocknen bei 20 bis 200°C und Calcinieren bei 200 bis 600°C. Ferner wurden antibiotische Mittel, die diese Mischungen enthalten, gefunden und antibiotische Mittel enthaltend 0,05 bis 80 Gew.-% einer Mischung nach Anspruch 1 und 99,95 bis 20 Gew.-% eines Harzes, ausgewählt aus der Gruppe bestehend aus Polyethylen, Polypropylen, Polyvinylchlorid, ABS-Harz, Polyestern, Polyvinylchloriden, Polyamiden, Polystyrol, Polyacetale, Polyvinylalkohol, Polycarbonat, Acrylharzen, Fluorkunststoffen, Polyurethanen, Phenolharzen, Harnstoffharzen, Melaminharzen, ungesättigten Polyesterharzen, Epoxyharzen, Reyon, Kupferammonium-Reyon, Acetalen, Triacetaten, Vinyliden, natürlichen oder synthetischen Gummis.

Die erfindungsgemäßen Mischungen enthalten Silber in Mengen in der Regel von 0,001 bis 30 Gew.-%, bevorzugt 0,01 bis 10 Gew.-%, besonders bevorzugt 0,1 bis 5 Gew.-% mit einem Teilchendurchmesser von 0,001 bis 5 µm, bevorzugt 0,01 bis 2 µm, besonders bevorzugt 0,1 bis 1,5 µm auf einem neutralen oder basischen nicht zeolithischen Trägeroxid der Elemente der Gruppe IIa, IIIa, IIb, IIIb des Periodensystems der Elemente wie Magnesium, Calcium, Strontium, Barium, Bor, Aluminium, Gallium, Indium, Zink, Scandium Yttrium und Lanthan, bevorzugt Magnesium, Aluminium, Gallium, Zink und Lanthan, sowie Cer oder deren Gemische. Besonders bevorzugt sind Magnesium und Zink, insbesondere Magnesium. Gegebenenfalls enthalten die Mischungen zusätzlich 0,01 bis 5 Gew.-%, bevorzugt 0,05 bis 3 Gew.-%, besonders bevorzugt 0,1 bis 2 Gew.-% eines oder mehrerer Elemente der VIII. Nebengruppe des Periodensystems der Elemente.

Der Teilchendurchmesser des Trägeroxids kann in weiten Grenzen variieren, liegt in der Regel bei 0,01 bis 5000 µm, bevorzugt 0,1 bis 1000 µm, besonders bevorzugt 1 bis 100 µm, insbesondere 1 bis 100 µm, wobei das Verhältnis der Teilchendurchmesser des Trägeroxids zum Silber in der Regel 3 : 1 bis 10 000 : 1, bevorzugt 5 : 1 bis 500 : 1, besonders bevorzugt 10 : 1 bis 100 : 1 beträgt.

Überraschenderweise wurde gefunden, daß feinteilige Ag-Cluster auf Trägern weitgehend farblos oder grau sind und sehr gute bakterizide Eigenschaften besitzen. Darüber hinaus sind sie stabil gegenüber der Einwirkung von Laugen. Feinteilige Ag/Träger-Pulver lassen sich in an sich bekannter Weise, gegebenenfalls mit einem Dispergierhilfsmittel, in Kunststoffe, insbesondere in Kunststoffasern, einarbeiten und behalten dort ihre bakterizide Wirkung.

Das metallische Silber kann nach den bekannten, in der Katalysatorherstellung üblichen Methoden aufgebracht werden. Dazu gehört die Tränkung (Imprägnierung) mit einem Silbersalz (z. B. Nitrat, Acetat) oder einem Silberkomplex (z. B. Ag(NH₃)₂OH) gefolgt von thermischer Zersetzung oberhalb von 200°C oder einer chemischer Reduktion mit Wasserstoff oder mit einer organischen Verbindung (z. B. Formaldehyd). Alternativ dazu kann das Silber auch durch chemische Reduktion aus der flüssigen Phase abgeschieden oder im Vakuum aufgedampft werden.

Um möglichst helle (bzw. farbneutrale) Produkte zu erhalten, sollten die Silberpartikel kleiner als 2 µm sind, was vor allem durch die Verwendung von basischen Trägern begünstigt wird. Dem Silber kann zur Verstärkung der antibiotischen Wirkung ein weiteres Element (z.B. Pd) zugefügt werden.

### Beispiele

### Beispiel 1

50 g alpha-Al₂O₃ wurden mit einer Lösung von 3.9 g AgNO₃ in 100 ml Wasser eine Stunde lang bei Raumtemperatur gerührt, anschließend eingedampft, 5 h bei 110°C unter N₂ getrocknet und 3 h bei 550°C in N₂ calciniert. Man erhielt ein leicht grau getöntes Produkt.

### Beispiel 2

50 g MgO wurden mit einer Lösung von 3,9 g AgNO₃ in 180 ml Wasser eine Stunde lang bei Raumtemperatur gerührt, anschließend eingedampft, 5 h bei 110°C unter N₂ getrocknet und 3 h bei 550°C in N₂ calciniert. Man erhielt ein weißes Produkt, das sich nach Zusatz von 1 n NaOH nicht dunkel färbt. Erst beim Zusatz einer Na₂S-Lösung tritt eine dunkle Verfärbung auf. Die Untersuchung mittels Elektronenmikroskop zeigte auf MgO geträgerte Silbermetallteilchen mit einem Durchmesser von < 2 µm.

### Beispiel 3

50 g La₂O₃ wurden mit einer Lösung von 3.9 g AgNO₃ in 100 ml Wasser eine Stunde lang bei Raumtemperatur gerührt, anschließend eingedampft, 5 h bei 110°C unter N₂ getrocknet und 3 h bei 300°C in N₂ calciniert. Man erhielt ein grau gefärbtes Produkt.

### Beispiel 4

50 g ZnO wurden mit einer Lösung von 3.9 g AgNO₃ in 300 ml Wasser eine Stunde lang bei Raumtemperatur gerührt, anschließend eingedampft, 5 h bei 110°C unter N₂ getrocknet und 3 h bei 300°C in N₂ calciniert. Man erhielt ein leicht grau getöntes Produkt.

### Beispiel 5

50 g CeO₂ wurden mit einer Lösung von 3.9 g AgNO₃ in 100 ml Wasser eine Stunde lang bei Raumtemperatur gerührt, anschließend eingedampft, 5 h bei 110°C unter N₂ getrocknet und 3 h bei 300°C in N₂ calciniert. Man erhielt ein hellgraues Produkt.

### Beispiel 6

50 g Ga₂O₃ wurden mit einer Lösung von 3.9 g AgNO₃ in 100 ml Wasser eine Stunde lang bei Raumtemperatur gerührt, anschließend eingedampft, 5 h bei 110°C unter N₂ getrocknet und 3 h bei 500°C in N₂ calciniert. Man erhielt ein grau gefärbtes Produkt.

### Beispiel 7

50 g TiO₂ wurden mit einer Lösung von 3.9 g AgNO₃ in 300 ml Wasser eine Stunde lang bei Raumtemperatur gerührt, anschließend eingedampft, 5 h bei 110°C unter N₂ getrocknet und 3 h bei 500°C in N₂ calciniert. Man erhielt ein grau getöntes Produkt, das sich im Tageslicht violett verfärbt.

Die Prüfung der bakteriziden Wirkung erfolgte nach der AATCC-Test-Method 147-1988 (Antibacterial Activity Assessment of Textile Materials: Parallel Streak Method). Es wurde die Grenzkonzentration in einer Agar-Platte ermittelt, bei der das Wachstum von Klebsiella pneumoniae, Pseudumonas aeruginosa und Staphylococcus aureus unterdrückt wird.

### Beispiel 8

### Prüfkeim Klebsiella pneumoniae

- -: = kein Wachstum
- +: = leichtes Wachstum
- ++: = Wachstum

| Nr. | Produkt | Konzentration in ppm | | | | |
|---|---|---|---|---|---|---|
| | | 10000 | 5000 | 2500 | 1000 | 500 |
| 1 | Ag/Al₂O₃ | - | - | + | ++ | ++ |
| 2 | Ag/MgO | - | - | - | - | + |
| 3 | Ag/La₂O₃ | - | - | + | ++ | ++ |
| 4 | Ag/ZnO | - | - | - | + | + |
| 5 | Ag/CeO₂ | - | - | - | ++ | ++ |
| 6 | Ag/Ga₂O₃ | - | + | ++ | ++ | ++ |
| 7 | Ag/TiO₂ | - | - | - | + | ++ |

### Beispiel 9

### Prüfkeim Pseudomonas aeruginosa

- -: = kein Wachstum
- +: = leichtes Wachstum
- ++: = Wachstum

| Nr. | Produkt | Konzentration in ppm | | | | |
|---|---|---|---|---|---|---|
| | | 10000 | 5000 | 2500 | 1000 | 500 |
| 1 | Ag/Al₂O₃ | - | - | ++ | ++ | ++ |
| 2 | Ag/MgO | - | - | - | - | ++ |
| 3 | Ag/La₂O₃ | - | - | - | ++ | ++ |
| 4 | Ag/ZnO | - | + | ++ | ++ | ++ |
| 5 | Ag/CeO₂ | - | - | ++ | ++ | ++ |
| 6 | Ag/Ga₂O₃ | - | + | ++ | ++ | ++ |
| 7 | Ag/TiO₂ | - | - | - | + | ++ |

### Beispiel 10

### Prüfkeim Staphylococcus aureus

- -: = kein Wachstum
- +: = leichtes Wachstum
- ++: = Wachstum

| Nr. | Produkt | Konzentration in ppm | | | | |
|---|---|---|---|---|---|---|
| | | 10000 | 5000 | 2500 | 1000 | 500 |
| 1 | Ag/Al₂O₃ | - | + | + | ++ | ++ |
| 2 | Ag/MgO | - | - | - | - | + |
| 3 | Ag/La₂O₃ | - | - | + | ++ | ++ |
| 4 | Ag/ZnO | - | - | - | + | + |
| 5 | Ag/CeO₂ | - | - | + | ++ | ++ |
| 6 | Ag/Ga₂O₃ | - | + | ++ | ++ | ++ |
| 7 | Ag/TiO₂ | - | - | - | + | ++ |

## Patentansprüche

1. Mischungen enthaltend Silber mit einem Teilchendurchmesser von 0,001 bis 5 µm auf einem neutralen oder basischen nicht zeolithischen Trägeroxid der Elemente der Gruppe IIa, IIIa, IIb, IIIb des Periodensystems der Elemente, der Lanthaniden oder deren Gemische.

2. Mischungen enthaltend Silber mit einem Teilchendurchmesser von 0,001 bis 5 µm auf einem neutralen oder basischen nicht zeolithischen Trägeroxid der Elemente Magnesium, Zink oder deren Gemische.

3. Mischungen enthaltend Silber mit einem Teilchendurchmesser von 0,001 bis 5 µm auf einem basischen Magnesiumoxidträger.

4. Mischungen nach Anspruch 1, dadurch gekennzeichnet, daß das neutrale oder basische nicht zeolithische Trägeroxid 0,01 bis 10 Gew.-% Silber enthält.

5. Mischungen nach Anspruch 1, dadurch gekennzeichnet, daß die Mischungen zusätzlich 0,01 bis 5 Gew.-% eines oder mehrerer Elemente der VIII. Nebengruppe des Periodensystems der Elemente enthalten.

6. Antibiotische Mittel enthaltend Mischungen nach Anspruch 1.

7. Antibiotische Mittel enthaltend Mischungen nach Anspruch 1 zum Einsatz in Kunststoffasern oder Formteilen.

8. Antibiotische Mittel enthaltend 0,05 bis 80 Gew.-% einer Mischung nach Anspruch 1 und 99,95 bis 20 Gew.-% eines Harzes, ausgewählt aus der Gruppe bestehend aus Polyethylen, Polypropylen, Polyvinylchlorid, ABS-Harz, Polyestern, Polyvinylchloriden, Polyamiden, Polystyrol, Polyacetale, Polyvinylalkohol, Polycarbonat, Acrylharzen, Fluorkunststoffen, Polyurethanen, Phenolharzen, Harnstoffharzen, Melaminharzen, ungesättigten Polyesterharzen, Epoxyharzen, Reyon, Kupferammonium-Reyon, Acetalen, Triacetaten, Vinyliden, natürlichen oder synthetischen Gummis.

9. Verfahren zur Herstellung von Mischungen nach Anspruch 1, dadurch gekennzeichnet, daß man die neutralen oder basischen nicht zeolithischen Trägeroxide mit einer Silbersalzlösung tränkt, bei 20 bis 110°C trocknet und bei 150 bis 6000°C calciniert.
